# DEMANDE DE BREVET EUROPEEN

(11) **EP 2 194 498 A1**
(43) Date de publication de la demande: **09.06.2010**
(21) Numéro de dépôt: 08305888.3
(22) Date de dépôt: 05.12.2008
(51) Int. Cl.: G06Q 20/00

(54) **Procédé de sécurisation d'une transaction NFC entre un lecteur et un terminal**

(71) Demandeur: Gemalto SA, 92190 Meudon (FR)
(72) Inventeur: Bordron, Damien, 83860 Nans les Pins (FR)

(57) **Abrégé**

L'invention concerne un procédé de sécurisation d'une transaction NFC entre un lecteur et un terminal, ledit procédé consistant à :
- effectuer une première transaction NFC entre le terminal et le lecteur ;
- effectuer une seconde transaction NFC entre le terminal et le lecteur après avoir entré un code confidentiel dans le terminal ;

le procédé étant **caractérisé en ce qu**'il consiste à :
- durant la première transaction NFC, transmettre du terminal au lecteur un identifiant du terminal ;
- durant la seconde transaction NFC, transmettre du terminal au lecteur le même identifiant ;
- vérifier dans le lecteur que les identifiants reçus pendant les première et seconde transactions sont identiques et, si oui, procéder à la transaction et, si non, rejeter la transaction.

## Description

Le domaine de l'invention est celui de la sécurisation des transactions réalisées électroniquement entre un terminal mobile et un lecteur. Plus précisément, la présente invention concerne la sécurisation de transactions électroniques réalisées selon le standard NFC (Near Field Communication en anglais ou encore Communication en Champ Proche).

De manière connue, la technologie NFC est une technologie de communication sans fil en cours de standardisation. Elle permet aux. Cette technologie permet ainsi le téléchargement de fichiers entre un téléphone portable et un ordinateur, ou un échange de données entre un appareil photo et un PDA.

La technologie NFC permet notamment à un terminal mobile de fonctionner en mode émulation de carte, c'est à dire que le terminal mobile associé à un élément de sécurité émule le fonctionnement d'une carte à puce sans contact. Dans le cas où le terminal mobile est un téléphone mobile compatible GSM ou UMTS, la carte SIM est utilisée comme élément de sécurité. Les usages sont multiples et forment un sur ensemble des usages de type « carte sans-contact » : paiement, billettique (ex. : Navigo), couponing ou encore contrôle d'accès. Le mobile permet par exemple de payer et de recharger ses titres de transport à tout instant ou de recevoir l'ensemble de ses points de fidélité sur son mobile.

Cette technologie NFC est utilisable sur de très courtes distance, moins de 10 centimètres. Elle suppose une démarche volontaire de l'utilisateur et ne peut donc normalement pas être utilisée à son insu.

Un consortium de banques et d'opérateurs de téléphonie mobile a récemment lancé un projet appelé P€GASUS. Ce projet a pour objectif de définir les fonctionnalités d'un moyen de paiement simple et rapide disponible sur un téléphone mobile disposant de la technologie NFC : le paiement d'un produit acheté par un client auprès d'un commerçant s'effectue en approchant le terminal mobile du client d'un lecteur appartenant au commerçant. Ce lecteur est lui-même relié à des serveurs bancaires via un réseau de communication.

Deux modes de paiement sont prévus dans la spécification PEGASUS:

Le premier mode de paiement est prévu pour des transactions de petits montants, typiquement inférieurs à 20 Euros.

Dans ce mode de paiement, le commerçant saisit (première étape) le montant de la transaction sur son terminal de paiement électronique (TPE) permettant le règlement par le biais d'une interface sans contact (typiquement un lecteur) reliée et pilotée par le TPE. Le client est alors invité (deuxième étape) à présenter son téléphone mobile sur cette interface sans contact dans un délai déterminé (par exemple 1 minute). Le téléphone doit physiquement être positionné face à l'interface à une distance maximale de 4 cm. Concrètement, il convient donc pour l'utilisateur de « toucher » l'interface sans contact. Ce contact physique est couramment appelé TAP.

Dans une troisième étape, le client maintient son téléphone mobile face à l'interface sans contact jusqu'à ce qu'un signal (bip sonore et/ou lumière distinctive) lui indique la fin de la transaction. Le montant de la transaction en cours s'affiche alors sur l'écran du téléphone mobile.

La finalisation de la transaction est la quatrième et dernière étape du paiement. Pour le commerçant, elle caractérise la validation de la transaction. Elle consiste, en fonction du type de point de vente, soit à l'émission d'un ticket de reçu de transaction, soit à la remise du produit acheté.

Le second mode de paiement est prévu pour des transactions de montants plus importants, typiquement comprises entre 20 et 100 €.

Dans ce second mode de paiement, les premières et secondes étapes sont identiques à celles exposées ci-dessus.

Durant la troisième étape, le client maintient son téléphone mobile devant l'interface sans contact jusqu'à l'identification de la signalétique l'invitant à retirer son mobile. La carte SIM a détecté que le seuil de 20 € a été dépassé et interrompt la transaction.

Lors d'une quatrième étape, le client doit alors saisir un code secret sur le clavier de son téléphone mobile (code PIN). Cette opération permet dans le même temps pour la transaction en cours, d'une part d'activer l'application de paiement, et d'autre part de laisser le client valider le montant affiché sur l'écran de son téléphone mobile.

Durant une cinquième étape, le client est invité à repositionner son mobile devant le lecteur sans contact pour effectuer la transaction. Il « retouche » ainsi la borne de paiement et maintient son téléphone jusqu'au signal lui indiquant qu'il peut le retirer. Cette opération correspond donc à un double TAP puisqu'un le client aura présenté son terminal mobile à deux reprises devant le lecteur.

Une sixième et dernière étape finalise la transaction par la validation de la transaction par le commerçant. Le TPE peut émettre un ticket de reçu de transaction de la même façon que pour un paiement réalisé avec une carte à contact.

II est à signaler que même pour des montants inférieurs à 20 €, le client peut choisir de devoir entrer un code sur le clavier de son téléphone mobile. Ceci permet d'éviter toute transaction effectuée à l'aide d'un téléphone mobile volé par exemple. Le second mode de paiement à double TAP est alors mis en oeuvre quel que soit le montant de la transaction.

Le problème posé par cette procédure de double TAP et qu'il n'est pas possible de savoir si le terminal portable NFC ayant réalisé la première procédure de TAP est le même que celui qui a réalisé la seconde procédure de TAP. En clair, il peut se produire qu'un premier client réalise la première procédure de TAP avec un premier terminal portable et qu'un second client réalise la seconde procédure de TAP pour la même transaction avec un second terminal portable. Le compte bancaire qui sera débité du montant de la transaction sera alors à celui du second client alors que le compte du premier client aurait dû être débité. Des fraudes sont donc possibles. Ceci est d'autant plus probable lorsque le délai maximal séparant deux TAPs successifs est long.

De même, dans le cas d'un commerçant indélicat qui disposerait de deux lecteurs, la première procédure de TAP pourrait être réalisée sur un premier lecteur alors que la seconde le serait sur un second lecteur.

La présente invention a notamment pour objectif de remédier à ces inconvénients.

Plus précisément un des objectifs de l'invention et d'assurer que la transaction globale s'effectue, lors d'un double TAP, à l'aide d'un seul lecteur et d'un seul terminal mobile tout au long de la transaction. Le but est donc de s'assurer que le même lecteur et le même terminal mobile sont utilisés lors des deux procédures de TAP.

Cet objectif, ainsi que d'autres qui apparaîtront par la suite, est atteint grâce à un procédé de sécurisation d'une transaction NFC entre un lecteur et un terminal, le procédé consistant à :
- effectuer une première transaction NFC entre le terminal et le lecteur ;
- effectuer une seconde transaction NFC entre le terminal et le lecteur après avoir entré un code confidentiel dans le terminal ;
- durant la première transaction NFC, transmettre du terminal au lecteur un identifiant du terminal ;
- durant la seconde transaction NFC, transmettre du terminal au lecteur le même identifiant ;
- vérifier dans le lecteur que les identifiants reçus pendant les première et seconde transactions sont identiques et, si oui, procéder à la transaction et, si non, rejeter la transaction.

Selon un mode de mise en oeuvre préférentiel, le procédé consiste également à :
- durant la première transaction NFC, transmettre du lecteur au terminal un identifiant du lecteur ;
- durant ladite seconde transaction NFC, transmettre du lecteur au terminal le même identifiant ;
- vérifier dans le terminal que les identifiants reçus pendant les première et seconde transactions sont identiques et, si oui, procéder à la transaction et, si non, rejeter la transaction.

Le terminal est de préférence un terminal de téléphonie mobile.

L'identifiant du terminal est avantageusement choisi parmi la liste suivante :
- le code PAN de l'application bancaire associée
- son code IMEI ;
- code IGCID ;
- code MSISDN ;
- un nombre généré aléatoirement ;
- un identificateur de l'application sans contact utilisée.

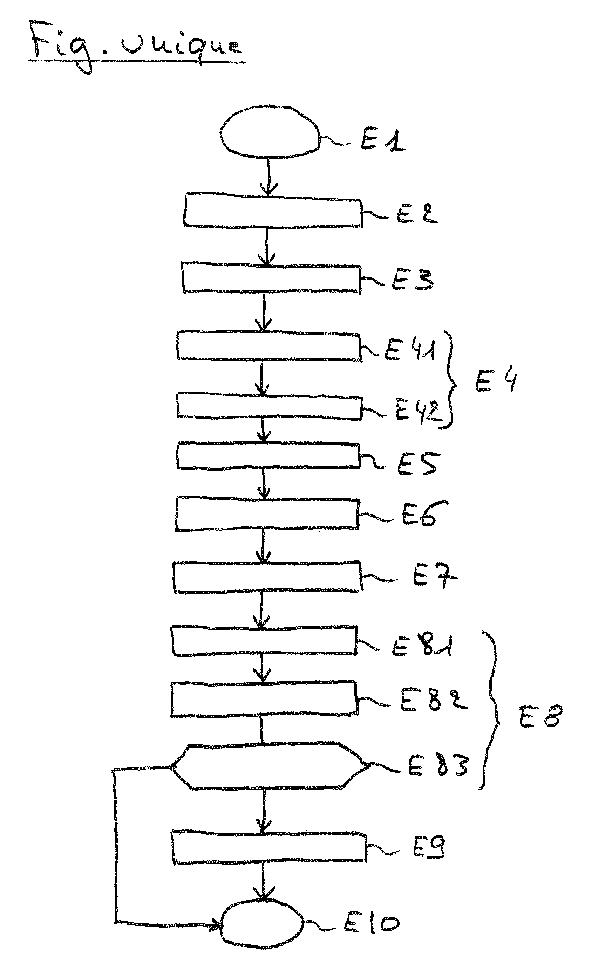

D'autres caractéristiques et avantages de l'invention apparaîtront à la lecture suivante de deux modes de mise en oeuvre avantageux de l'invention, donnés à titre illustratif et non limitatif, et de la figure unique annexée représentant un mode de mise en oeuvre préférentiel du procédé selon l'invention.

Dans ce mode de mise en oeuvre, l'étape E1 est une étape de début.

Lors d'une étape E2, le commerçant saisit le montant de la transaction sur son TPE.

Le client est alors invité lors d'une étape E3 à présenter son téléphone mobile sur cette interface sans contact dans un délai déterminé.

Le premier TAP est représenté par une étape E4 comprenant deux sous-étapes E41 et E42.

Durant la sous-étape E41, le client maintient son téléphone mobile devant l'interface sans contact. Selon l'invention, pendant cette sous-étape E41 où le terminal mobile est en communication avec le lecteur, le terminal transmet, pendant la sous-étape E42, un identifiant au lecteur. Cet identifiant a pour but, comme il sera vu par la suite, de permettre au lecteur de reconnaître le terminal lors du second TAP.

Lors d'une étape E5, l'utilisateur est invité à retirer son mobile du lecteur.

A l'étape E6, le client saisit son code secret sur le clavier de son téléphone mobile. II peut par exemple s'agir du code PIN utilisé pour s'authentifier auprès de son téléphone mobile ou de tout code secret que l'utilisateur doit utiliser pour autoriser la transaction.

Comme déjà précédemment indiqué, cette opération permet dans le même temps pour la transaction en cours, d'une part d'activer l'application de paiement, et d'autre part de laisser le client valider le montant affiché sur l'écran de son téléphone mobile.

Lors d'une étape E7, le client est invité à repositionner son mobile devant le lecteur sans contact pour effectuer la transaction. L'étape E8 correspond au double TAP précédemment évoqué et comprend selon l'invention trois sous-étapes E81 à E83.

Durant la sous-étape E81, le client approche à nouveau son téléphone de la borne de paiement. A la sous-étape E82, le terminal transmet au lecteur le même identifiant que celui qu'il a transmis lors de la sous-étape E42 (si le terminal utilisé est le même).

Le lecteur vérifie alors, lors de la sous-étape E83 si les identifiants reçus pendant les transactions E4 et E8 sont identiques. Si les identifiants sont identiques, le lecteur a l'assurance que le terminal utilisé pendant la première transaction E4 est bien le même que celui utilisé pendant la seconde transaction E8. Le lecteur pourra alors, lors d'une étape E9, procéder à la transaction (validation par le commerçant et/ou émission d'un ticket de reçu de transaction). Dans la négative, le lecteur aura détecté une erreur ou une tentative de fraude et décidera de mettre fin à la transaction en allant directement à une étape de fin E10.

L'invention permet donc de vérifier que le terminal utilisé lors du premier TAP est bien le même que celui utilisé lors du second TAP.

L'identifiant transmis du terminal au lecteur est par exemple un nombre généré aléatoirement, le code PAN (acronyme de Primary Account Number en anglais ou alors numéro de la carte bancaire NFC) du terminal, son code IMEI, son code ICCID, son code MSISDN ou alors un identificateur de l'application sans contact utilisée.

Un mode de mise en oeuvre préférentiel de l'invention consiste par ailleurs à vérifier au sein du terminal mobile que le lecteur utilisé lors de la première transaction est bien le même que celui utilisé lors de la seconde transaction.

À ce titre, durant la première transaction NFC, par exemple durant la sous-étape E42, le lecteur transmet au terminal un identifiant. Lors de la seconde transaction, par exemple durant la sous-étape E82, le lecteur transmet au terminal son identifiant. Durant la sous-étape E83, le terminal vérifie que les identifiants reçus pendant les première et seconde transactions sont bien identiques. S'ils le sont, le terminal autorise la poursuite de la transaction, sinon il provoque un rejet de cette transaction. Une authentification mutuelle a donc lieu dans ce mode de mise en oeuvre préférentiel.

L'identifiant transmis du lecteur au terminal est par exemple un nombre généré aléatoirement ou alors son numéro de série.

La description qui précède a été donnée à simple titre illustratif et non limitatif et l'homme du métier imaginera aisément d'autres modes de mise en oeuvre de la présente invention entrant dans le cadre des revendications.

## Revendications

1. Procédé de sécurisation d'une transaction NFC entre un lecteur et un terminal, ledit procédé consistant à :
- effectuer une première transaction NFC (E4) entre ledit terminal et ledit lecteur ;
- effectuer une seconde transaction NFC (E8) entre ledit terminal et ledit lecteur après avoir (E6) entré un code confidentiel dans ledit terminal ;
**caractérisé en ce qu'**il consiste à :
- durant ladite première transaction NFC (E4), transmettre (E42) dudit terminal audit lecteur un identifiant dudit terminal ;
- durant ladite seconde transaction NFC (E8), transmettre (E82) dudit terminal audit lecteur le même identifiant ;
- vérifier (E83) dans ledit lecteur que les identifiants reçus pendant lesdites première et seconde transactions (E4, E8) sont identiques et, si oui, procéder à ladite transaction (E9) et, si non, rejeter ladite transaction (E10).

2. Procédé selon la revendication 1, **caractérisé en ce qu'**il consiste également à :
- durant ladite première transaction NFC (E4), transmettre dudit lecteur audit terminal un identifiant dudit lecteur ;
- durant ladite seconde transaction NFC (E8), transmettre dudit lecteur audit terminal le même identifiant ;
- vérifier (E83) dans ledit terminal que les identifiants reçus pendant lesdites première et seconde transactions (E4, E8) sont identiques et, si oui, procéder à ladite transaction (E9) et, si non, rejeter ladite transaction (E10).

3. Procédé selon l'une des revendications 1 et 2, **caractérisé en ce que** ledit terminal est un terminal de téléphonie mobile.

4. Procédé selon l'une des revendications 1 à 3, **caractérisé en ce que** ledit identifiant dudit terminal est choisi parmi la liste suivante :
- son code PAN ;
- son code IMEI ;
- un nombre généré aléatoirement ;
- son code ICCID ;
- son code MSISDN ;
- un identificateur de l'application sans contact utilisée.
